# EUROPÄISCHE PATENTSCHRIFT

(11) **EP 1 491 470 B1**
(45) Veröffentlichungstag und Bekanntmachung des Hinweises auf die Patenterteilung: **07.03.2007**
(21) Anmeldenummer: 04102854.9
(22) Anmeldetag: 21.06.2004
(51) Int. Cl.: B65G 53/60, B65G 53/24

(54) **Unterdruckbehälter mit aktiver Schnellentleerungsventilsteuerung**
Vaccuum receiver with positive dump valve control
Récipient sous vide avec vanne de décharge à commande forcée

(30) Priorität: 23.06.2003 US 480232 P
(43) Veröffentlichungstag der Anmeldung: 29.12.2004
(73) Patentinhaber: MANN + HUMMEL ProTec GmbH, 64625 Bensheim (DE)
(72) Erfinder: Rainville, Donald D., 22554, Stafford, VA (US); Crawford, Robert R., 22554, Stafford, VA (US); Goldfarb, William B., 20112, Manassas, VA (US); Paquette, Leonard, 22193, Woodbridge, VA (US)
(74) Vertreter: Voth, Gerhard

(56) Entgegenhaltungen:
- CH-A- 688 753
- DE-A- 10 024 428
- US-B1- 6 394 708

## Beschreibung

### Hintergrund der Erfindung

Die vorliegende Erfindung bezieht sich auf einen neuen, pneumatischen Förderbehälter mit aktiver Schnellentleerungsventilsteuerung, insbesondere für die Verwendung als Unterdruckbehälter für pneumatische Fördersysteme zur Förderung von partikelförmigen Materialien, wie Kunststoffgranulat, gemäß dem Oberbegriff des Anspruchs 1.

Ein pneumatisches Transportsystem ist ein bevorzugtes Verfahren zur Abwicklung von Schüttgut bei zahlreichen Anwendungen mit Schüttgütern in Produktionsumgebungen. Es ermöglicht die Bewegung einer großen Vielzahl von Materialien durch ein einfaches, rohrförmiges Leitungssystem. Die bevorzugte Wahl gründet sich auf geringe Kosten, eine einfache Installation und bei der Verwendung von Unterdruck als Antriebskraft einem minimalen Aufwand, da Staubverschmutzungen unwahrscheinlich sind. Derartige Systeme umfassen eine Antriebsquelle, wie z. B. einen Lüfter oder ein Gebläse, eine Materialquelle, einen Auffang behälter, ein Verbindungsrohr von der Materialquelle zum Behälter und anschließend zu der Unterdruckquelle sowie ein Steuergerät. Unter normalen Betriebsbedingungen belädt ein einfache s System den einzelnen Behälter durch Start des Luftantriebes und ermöglicht so, dass das Quellmaterial in das Aufnahmeende des Rohres gelangt und in den Behälter abgeschieden wird. Dies erfolgt mittels eines diskontinuierlichen Verfahrens, um so die mit der ventilgesteuerten Material abfuhr am Behälterauslass verbundenen Kosten zu minimieren.

Eine typischer Aufbau derartiger Vorrichtungen umfasst einen Aktuator, entweder mit Luft oder elektrisch betrieben, um den Behälter mit der pneumatischen Antriebsquelle zu verbinden, sowie ein kraftbetriebenes Auslassventil mit einem weiteren Aktuator zum Auslassen des geförderten Gutes aus dem Behälter. Die Verwendung von Luftzylindern ist bekannt, um die Ventile zu betreiben; wenn jedoch zwei separate Funktionen ausgeführt werden, sind immer zwei separate Antriebseinheiten zum Stellen der Ventile vorgesehen. Der Markt für derartige Vorrichtungen ist jedoch von sehr hohen Kosten geprägt, und bei der Verwendung von zwei pneumatischen Antrieben stellt der Aufwand für den weiteren Aktuator einen erheblichen Kostennachteil dar. Auf dem extrem preisorientierten Markt der grundlegenden pneumatischen Fördersysteme können die Zusatzkosten für ein angetriebenes Auslassventil, welches an jedem Endpunkt vorgesehen ist, das System unerschwinglich teuer werden lassen.

In einer kostengünstigeren Anordnung gemäß dem Dokument DE-A-100 24 428 können die Ausgaben für einen weiteren Aktuator durch ein nicht angetriebenes, durch Schwerkraft betätigtes Entleerungsventil vermieden werden. Ein mit Schwerkraft betriebenes Auslassventil ermöglicht dem geförderten Material, aus dem Behälter zu fallen, nachdem sich der Unterdruck nach jeder abgeschlossenen Ladung abgebaut hat. Eine fehlende aktive Betätigung der gebräuchlichen mit Schwerkraft betriebenen Materialauslassventilmechanismen führt jedoch auch zu Problemen. In einigen Fällen blockiert das durch Schwerkraft betriebene Ventil aufgrund von Streugranulat des zu fördernden Materials, und infolgedessen wird kein Material während des Ladezyklus transportiert. Es kommt nicht selten vor, dass derartige Ventile im Hinblick auf eine ordnungsgemäße Abdichtung versagen, bedingt durch die mangelnde aktive Dichtkraft. Es ist möglich, dass die fehlerhafte Abdichtung den Aufbau des Unterdrucks verhindert, der erforderlich ist, um weiteres Material von der Granulatquelle zum Unterdruckbehälter anzusaugen.

Somit wird bei der Konstruktion von herkömmlichen Unterdruckbehältern entweder ein durch Schwerkraft betriebenes Entleerungsventil für eine einfache Vorrichtung verwendet oder ein betätigbares Materialentleerungsventil für eine sicherere Abdichtung. Im Falle der Anwendung eines durch Schwerkraft betriebenen Entleerungsventils kann es zu ein em fehlerhafte n Ladezyklus kommen, wenn das Ventil teilweise geöffnet ist aufgrund der an den Dichtflächen anhaftenden Granulate. Und obwohl die Verwendung eines kraftbetätigten Ventils das üblicherweise Anhaften von Material an der Dichtung verhindert, steigen die Kosten für die Vorrichtung durch die Verwendung eines zweiten Aktuators immens.

Die übliche Voraussetzung, auf die innenliegenden Flächen des Unterdruckbehälters zum Reinigen und Instandsetzen zugreifen zu können, erlaubt keine konventionelle Kopplung zwischen zwei Ventileinrichtungen, wie sie bei herkömmlichen Unterdruckbehältern zur Anwendung kommt. Derartige Einheiten umfassen üblicherweise einen Trichterboden sowie einen zylindrischen Behälter mit Materialentleerungsventil, welches am unteren Ende des Trichters angeordnet ist. Das obere Ende des Zylinders ist offen und ein separater Deckel deckt die Öffnung ab, wobei der Deckel in der Regel die Luft/Materialabscheidemedien sowie den Luftauslass aufnimmt oder beinhaltet. Da das Sequenzventil an dem Deckel und dem Luftauslass angeschlossen ist, ist es mittels eines entfernbaren Deckels nicht möglich, ein Entleerungsventil mit dem Vakuumsequenzventil am Luftauslass zu koppeln.

### Aufgabe der Erfindung

Die Aufgabe der Erfindung ist es demzufolge, einen verbesserten Unterdruckbehälter mit aktiver Schnellentleerungsventilsteuerung zu schaffen.

Eine weitere Aufgabe der Erfindung ist es, einen zuverlässig arbeitenden Unterdruckbehälter zu schaffen, der zu moderaten Kosten gebaut werden kann und bei dem auf einen zweiten Aktuator zur Steuerung des Schnellentleerungsventils verzichtet werden kann.

Eine weitere Aufgabe der Erfindung ist es, eine aktive Schnellentleerungsventilsteuerung an dem Unterdruckbehälter vorzusehen, welcher kostengünstig herzustellen ist und es zudem ermöglicht, den Behälterdeckel auf einfache Weise zu entfernen, um die Reinigung des Aufnahmebehälters zu erleichtern.

Diese und weitere Aufgaben werden gemäß der vorliegenden Erfindung dadurch erreicht, dass der Unterdruckbehälter für ein pneumatisches Fördersystem geschaffen wird, umfassend einen einzigen Aktuator zum Betätigen des Fördergasventils und des Auslassventils.

Weitere bevorzugte Merkmale der Erfindung werden in den abhängigen Ansprüchen beschrieben.

### Zusammenfassung der Erfindung

Gemäß der vorliegenden Erfindung ist ein einziger pneumatischer Aktuator in einer einzigartigen Weise zum Betätigen sowohl des Ventils, welches den Unterdruckbehälter mit einer pneumatischen (Unterdruck-) Antriebsquelle verbindet, als auch zum Betätigen eines aktiv arbeitenden Schnellentleerungsventils zum Entleeren des Behälters in einen Trichter vorgesehen . Auf diese Weise ist es möglich, die Nachteile eines passiven, durch Schwerkraft betriebenen Auslassventils zum Entleeren des Behälters zu vermeiden, ein aktiv gesteuertes Schnellentleerungsventil zu schaffen und dabei gleichzeitig auf einen zweiten Aktuator zu verzichten.

Bei der Ausgestaltung dieser Kammern ist der Bedarf nach einer automatisch ausgleichenden Dichtkraft durch einen Luftzylinder gedeckt. Die Verwendung eines Kurzhubs in beide Richtungen zur wechselseitigen Dichtung des Luftsaugrohres (z. B. die Verbindung zur Förderantriebsquelle) und dem Schnellentleerungsventil des Materialförderbehälters gleicht kleine Unterschiede bei Herstellungstoleranzen oder durch zeitbedingte Abnutzung aus.

Die Ausgestaltung der Endeinrichtung eines pneumatischen Fördersystems für Granulat als Massengut umfasst einen Behälter mit einem Materialeinlass, einen Luft/Materialabscheider, einen Luftauslass sowie eine Materialauslass. In der vorliegenden Erfindung stellt der Materialauslass an dem Behälter kein durch Schwerkraft betriebenes Schnellentleerungsventil dar. Stattdessen wird ein kraftbetriebenes Ventil als aktive Vorrichtung mit besserer Wirkung eingesetzt.

In einigen Fördersystemen ist mehr als ein Unterdruckbehälter an einer einzigen Luftantriebsquelle (Unterdruck) angeschlossen. In dieser Ausgestaltung ist ein Ventil erforderlich, um auf jeden einzelnen Unterdruckbehälter zugreifen zu können, da nur jeweils ein Förderbehälter online arbeiten kann. Die Ausgestaltung eines Unterdruckbehälters für derartige Systeme verwendet einen Aktuator, der auf die Unterdruckleitung der einzelnen Unterdruckbehälter zugreift.

Der erfindungsgemäße Unterdruckbehälter verwendet einen einzigen Aktuator mit zwei Befestigungsmöglichkeiten sowohl für ein Vakuumsequenzventil als auch für ein internes, aktives Materialschnellentleerungsventil. Das Verfahren, welches dies ermöglicht, basiert auf der Verwendung eines luftbetriebenen Aktuators zum Stellen der beiden Dichtungselemente. Das Positionieren der jeweiligen Dichtungen derart, dass der Luftzylinder sie an den entsprechenden Öffnungen anlegt und diese abdichtet, bevor das Ende des Zylinderhubes erreicht wird, erfordert eine aktive Abdichtung, wobei nach wie vor jegliche geringfügige Abmessungsänderungen in der Montage bzw. Abweichungen der Bauteile aufgefangen werden.

Durch die Verwendung eines unteren konischen Abschnittes des Unterdruckbehälters als Schnellentleerungsventilsitz wird die Dichtung automatisch so geführt, dass sie vollständig mit dem Kegel in Kontakt steht. Der obere Luftsequenzventilsitz ist mit einer weichen Verbindung befestigt, so dass minimale Winkelabweichungen überwunden werden.

Ein weiteres, wichtiges Merkmal der neuen Vorrichtung ist, dass der gesamte Mechanismus an dem Deckel des Behälters befestigt ist, so dass er mit dem Deckel entfernt werden kann und dadurch einen vollständigen Zugriff auf d ie Innenflächen der Kammer zum Reinigen ermöglicht.

Ein zusätzlicher Nutzen eines einzigen Aktuators ist darin zu sehen, dass der Einsatz von zwei Vorrichtungen vermieden und dem Bedienpersonal keine Gelegenheit für Bruchschäden oder andere Fehlfunktionen geboten wird.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Beschreibung der Ausführungsbeispiele

Die Erfindung wird nachfolgend anhand von bevorzugten Ausführungsbeispielen, wie sie in den beigefügten Zeichnungen ersichtlich sind, näher beschrieben: Es zeigen:
- Figur 1: die Seitenansicht eines Ausführungsbeispiels eines erfindungsgemäßen Unterdruckbehälters,
- Figur 2: die Schnittdarstellung des Ausführungsbeispiels eines Unterdruckbehälters gemäß Figur 1.

### Ausführliche Beschreibung der bevorzugten Ausführungsbeispiele

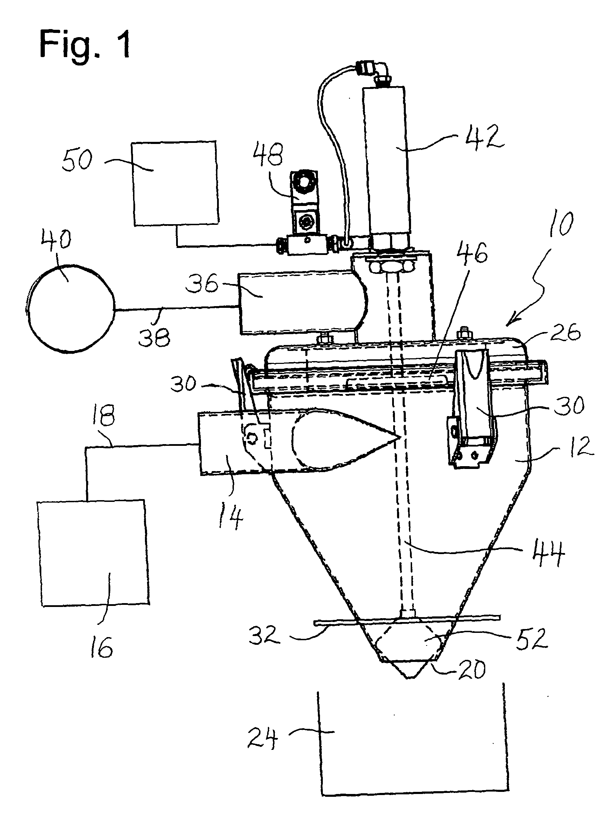

Figur 1 zeigt in der Seitenansicht ein Ausführungsbeispiel eines erfindungsgemäßen Unterdruckbehälters. Der Unterdruckbehälter 10 weist einen Aufnahmebehälter 12 mit einem Materialeinlass 14, einem Materialauslass 20 sowie einem Fördergasauslass 36 auf. Der Aufnahmebehälter 12 ist vorzugsweise ein Behälter mit trichterförmigem Boden mit einem Materialauslass 20, welcher am Boden des trichterförmigen Abschnittes des Behälters angebracht ist. Ein Deckel 26 ist oben am Behälter vorgesehen. In dem gezeigten Ausführungsbeispiel wird der Deckel 26 durch mehrere Halterungen 30 in seiner Position gehalten, obwohl man erkennen wird, dass beliebige geeignete Befestigungsmechanismen für die Befestigung des Deckels an dem Aufnahmebehälter Verwendung finden könnten.

Eine Fördergasquelle 40, wie beispielsweise eine Unterdruckpumpe, ist über ein Verbindungsrohr 38 mit dem Fördergasauslass 36 verbunden. Der Materialeinlass 14 ist über ein Verbindungsrohr 18 mit einer Granulatquelle 16 verbunden. Ein Befestigungsflansch 32 ist an dem Aufnahmebehälter 12 angebracht, um eine Befestigung des Aufnahmebehälters in einer gewünschten Position oberhalb de s Aufnahmetrichters 24 zu ermöglichen, welcher beispielsweise ein Versorgungstrichter für eine Kunststoffspritzgussmaschine sein kann.

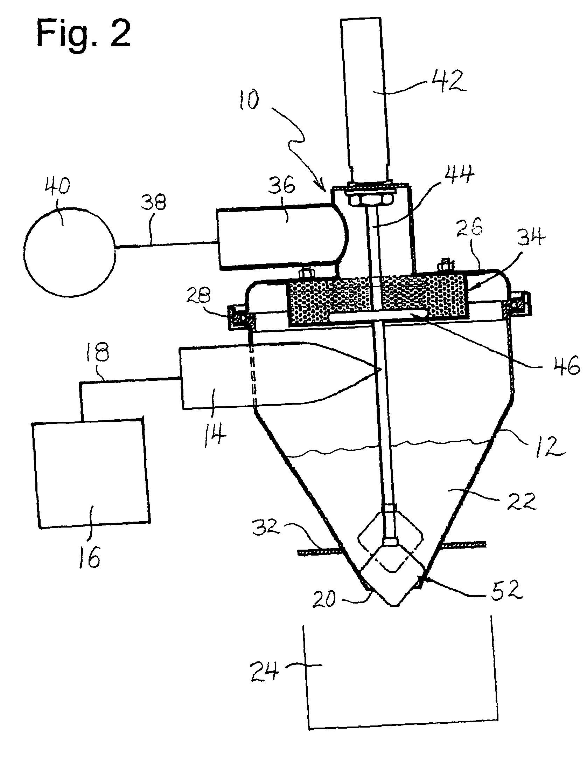

Wie in der Schnittdarstellung des Aufnahmebehälters 10 gemäß Figur 2 deutlicher dargestellt, ist vor dem Fördergasauslass 36 ein Sieb 34 vorgesehen. Das Sieb 34 dient zur Abscheidung der geförderten Partikel, z. B. Kunststoffgranulat, aus einem Fördergasstromes, z. B. Luft, im Inneren des Unterdruckbehälters. Ferner ist in Figur 2 eine Deckeldichtung 28 sichtbar, welche zwischen Aufnahmebehälter 12 und Behälterdeckel 26 angeordnet ist, um einen gasdichten Abschluss zu erzielen.

Ein Fördergasventilelement 46 ist zum Öffnen und Schließen des Fördergasauslasses 36 vorgesehen. Ebenso ist ein Materialauslassventilelement 52 zum Öffnen und Schließen des Materialauslasses 20 am Boden des Aufnahmebehälters 12 vorgesehen. Sowohl das Fördergasventilelement 46 als auch das Materialauslassventilelement 52 sind mit einer gemeinsamen Ventilstange 44 verbunden. Die Ventilstange ist wiederum mit einem Aktuator 42, beispielsweise einem Druckluftzylinder, verbunden, mittels welchem die Ventilstange 44 ausgefahren bzw. zurückgezogen werden kann. Das Materialauslassventilelement 52 kann hierbei bevorzugt aus einem elastischen Kunststoffmaterial bestehen, um eine möglichst gute Abdichtung gegenüber dem trichterförmigen Abschnitt des Aufnahmebehälters 12 zu gewährleisten.

In dem gezeigten Ausführungsbeispiel bewegt sich beim Ausfahren der Ventilstange 44 das Fördergasventilelement 46 nach unten, um den Fördergasauslass 36 freizugeben. Beim Ausfahren der Ventilstange 44 bewegt sich ebenfalls das Materialauslassventilelement 52 nach unten in eine Position, in welcher es fest an den unteren Wandungen des trichterförmigen Abschnittes des Aufnahmebehälters 12 anliegt und somit den Materialauslass 20 verschließt.

Im Betriebszustand ist die Unterdruckpumpe, welche als Fördergasquelle 40 dient, eingeschaltet, um einen Luftstrom aus dem Unterdruckbehälter 10 anzusaugen, so dass der Druck darin reduziert wird. Der reduzierte Druck in dem Unterdruckbehälter 10 saugt wiederum das Granulat an , welches in einem Fördergasstrom von der Granulatquelle 16 durch das Verbindungsrohr 18 und den Materialeinlass 14 in den Unterdruckbehälter 10 mitgerissen wird. Eine Ansammlung von Granulat 22 ist am Boden des Aufnahmebehälters 12 dargestellt. Das Sieb 34 verhindert, dass das Granulat 22 mit dem Fördergas durch den Fördergasauslass 36 strömt.

Erreicht das im Aufnahmebehälter 12 befindliche Granulat 22 ein bestimmtes Niveau, wird ein Steuerelement 48 betätigt, um Druckluft von der Druckluftquelle 50 an den Boden des Luftzylinders 42 abzugeben, so dass die Ventilstange 44 zurückgezogen oder -anders ausgedrückt- angehoben wird. Dadurch bewegt sich das Fördergasventilelement 46 nach oben über die Öffnung des Fördergasauslasses 36, wodurch der Fördergasstrom blockiert und der pneumatische Transport des Granulates von der Granulatquelle 16 in den Unterdruckbehälter 10 abgebrochen wird.

Gleichzeitig bewegt sich bei Zurückziehen der Ventilstange 44 das Materialauslassventilelement 52 in eine erhöhte Position, so dass der Materialauslass 20 geöffnet wird und das Granulat 22 aus dem Aufnahmebehälter 12 strömen kann, wodurch eine gewünschte Ladung von Granulat 22 in den Aufnahmetrichter 24 gefördert wird.

Nach Entleerung des Unterdruckbehälters 10 wird das Steuergerät 48 erneut betätigt, diesmal um Druckluft von der Druckluftquelle 50 an den oberen Abschnitt des Luftzylinders 42 zu liefern, wodurch die Ventilstange 44 nach unten in ihre ausgefahrene Position gebracht wird. Dies drückt das Materialauslassventilelement 52 aktiv gegen die Öffnung des trichterförmigen Bodens des Aufnahmebehälters 12, wodurch der Materialauslass 20 dicht verschlossen wird. Gleichzeitig bewegt sich das Fördergasauslassventilelement 46 nach unten und von dem Eintritt zu dem Fördergasauslass 36 weggerichtet, wodurch der Unterdruckpumpe 40 ermöglicht wird, einen neuen Fördergasstrom mit mitgerissenem Granulat 22 aus der Granulatquelle 16 in den Unterdruckbehälter 10 anzusaugen.

Ist eine Reinigung des Unterdruckbehälters erforderlich, beispielsweise wenn der Unterdruckbehälter an eine andere Kunststoffgranulatquelle angeschlossen werden soll, kann dies ganz einfach durch Entfernen des Deckels 26 erfolgen. Da Aktuator 42, Ventilstange 44, Fördergasventilelement 46 und Materialauslassventilelement 52 mit dem Deckel verbunden sind, geben all diese Komponenten bei Entfernen des Deckels 26 den Weg frei, wodurch ein ungehinderter Zugriff zu dem Aufnahmebehälter 12 zur Reinigung ermöglicht wird.

## Patentansprüche

1. Unterdruckbehälter (10) für ein pneumatisches Fördersystem, umfassend:
einen Aufnahmebehälter (12) mit einem Materialeinlass (14), einem Materialauslass (20) und einem Fördergasauslass (36);
ein Fördergasventil (46) zum selektiven Öffnen und Schließen des Fördergasauslasses (36);
ein Auslassventil (52) zum selektiven Öffnen und Schließen des Materialauslasses (20);
**dadurch gekennzeichnet, dass**
ein einziger Aktuator (42) zum Betätigen des Fördergasventils (46) und des Auslassventils (52) angeordnet ist.

2. Unterdruckbehälter nach Patentanspruch 1, **dadurch gekennzeichnet, dass** der Aufnahmebehälter (12) eine offene Oberseite hat und weiterhin einen Deckel (26) zum Verschließen der Oberseite des Aufnahmebehälters aufweist.

3. Unterdruckbehälter nach Patentanspruch 2, **dadurch gekennzeichnet, dass** der Aktuator (42), das Fördergasventil (46) und das Auslassventil (52) an dem Deckel (26) angeordnet sind.

4. Unterdruckbehälter nach einem der vorherigen Patentansprüche, **dadurch gekennzeichnet, dass** der Behälter (12) einen Trichterboden aufweist und der Materialauslas (20) an der Unterseite des Trichterbodens angeordnet ist.

5. Unterdruckbehälter nach Patentanspruch 1, wobei der Aktuator (42) einen Druckluftzylinder aufweist, welcher mit einer Druckluftquelle (50) verbunden ist.

6. Unterdruckbehälter nach einem der vorherigen Patentansprüche, **dadurch gekennzeichnet, dass** darüber hinaus ein Materialabscheideelement (34) in dem Behälter angeordnet ist, derart, dass das Materialabscheideelement das geförderte Material vom Fördergas trennt.

7. Unterdruckbehälter nach Patentanspruch 6, **dadurch gekennzeichnet, dass** das Materialabscheideelement (34) ein Sieb aufweist.

8. Unterdruckbehälter nach einem der vorherigen Patentansprüche, **dadurch gekennzeichnet, dass** das Fördergasventil (46) ein erstes bewegliches Ventilelement umfasst, welches an einer verlängerbaren und zurückziehbaren Ventilstange (44) angeordnet ist und wobei das Auslassventil (52) ein zweites bewegliches Ventilelement umfasst, welches ebenfalls an der verlängerbaren und zurückziehbaren Ventilstange (44) angeordnet ist.

## Claims

1. Vacuum container (10) for a pneumatic conveyor system, comprising: a storage container (12) with a material inlet (14), a material outlet (20) and conveying gas outlet (36); a conveying gas valve (46) for the selective opening and closing of the conveying gas outlet (36); an outlet valve (52) for the selective opening and closing of the material outlet (20), **characterised in that** a single actuator (42) is disposed for the actuation of the conveying gas valve (46) and the outlet valve (52).

2. Vacuum container according to claim 1, **characterised in that** the storage container (12) has an open top side and in addition a cover (26) for closing the top side of the storage container.

3. Vacuum container according to claim 2, **characterised in that** the actuator (42) the conveying gas valve (46) and the outlet valve (52) ate disposed on the cover (26).

4. Vacuum container according to one of the preceding claims, **characterised in that** the container (12) includes a funnel bottom and the material outlet (20) is disposed on the underside of the funnel bottom.

5. Vacuum container according to claim 1, wherein the actuator (42) includes a compressed air cylinder, which is connected to a compressed air source (50).

6. Vacuum container according to one of the preceding claims, **characterised in that**, over and above this, a material separating element (34) is disposed in the container in such a manner that the material separating element separates the conveyed material from the conveying gas.

7. Vacuum container according to claim 6, **characterised in that** the material separating element (34) includes a sieve.

8. Vacuum container according to one of the preceding claims, **characterised in that** the conveying gas valve (46) includes a first displaceable valve element (44), which is disposed at an extendable and retractable valve rod (44) and wherein the outlet valve (52) includes a second displaceable valve element, which is also disposed at the extendable and retractable valve rod (44).

## Revendications

1. Récipient à dépression (10) pour un système d'alimentation pneumatique, comprenant : un récipient de réception (12) muni d'une admission de matériau (14), d'une sortie de matériau (20) et d'une sortie de gaz d'alimentation (36), une soupape de gaz d'alimentation (46) pour ouvrir et fermer sélectivement la sortie de gaz d'alimentation (36), et une soupape d'échappement (52) pour ouvrir et fermer sélectivement la sortie de matériau (20),
**caractérisé par**
un seul actionneur (42) pour actionner la soupape de gaz d'alimentation (46) et la soupape d'échappement (52).

2. Récipient à dépression selon la revendication 1,
**caractérisé en ce que**
le récipient de réception (12) a une face supérieure ouverte et présente en outre un couvercle (26) pour fermer la face supérieure du récipient de réception.

3. Récipient à dépression selon la revendication 2,
**caractérisé en ce que**
l'actionneur (42), la soupape de gaz d'alimentation (46) et la soupape d'échappement (52) sont disposé(e)s sur le couvercle (26).

4. Récipient à dépression selon l'une des revendications précédentes,
**caractérisé en ce que**
le récipient (12) présente un fond en entonnoir et la sortie de matériau (20) est disposée sur la face inférieure du fond en entonnoir.

5. Récipient à dépression selon la revendication 1,
dans lequel
l'actionneur (42) présente un vérin d'air comprimé relié à une source d'air comprimé (50).

6. Récipient à dépression selon l'une des revendications précédentes,
**caractérisé en ce qu'**
un élément de séparation de matériaux (34) est en outre disposé dans le récipient de telle sorte que cet élément de séparation de matériaux sépare le matériau transporté du gaz d'alimentation.

7. Récipient à dépression selon la revendication 6,
**caractérisé en ce que**
l'élément de séparation de matériaux (34) est un tamis.

8. Récipient à dépression selon l'une des revendications précédentes,
**caractérisé en ce que**
la soupape de gaz d'alimentation (46) comprend un premier élément de soupape mobile disposé sur une tige de soupape (44) qui peut être allongée et rétractée, et la soupape d'échappement (52) présente un deuxième élément de soupape mobile également disposé sur la tige de soupape (44) qui peut être allongée et rétractée.
